# EUROPÄISCHE PATENTSCHRIFT

(11) **EP 0 519 244 B1**
(45) Veröffentlichungstag und Bekanntmachung des Hinweises auf die Patenterteilung: **01.03.1995**
(21) Anmeldenummer: 92109040.3
(22) Anmeldetag: 29.05.1992
(51) Int. Cl.: F16L 37/084, F16L 25/00

(54) **Lösbare Rohranschlussverbindung**
Demountable pipe connection
Raccord démontable pour tuyaux

(30) Priorität: 14.06.1991 DE 4119642
(43) Veröffentlichungstag der Anmeldung: 23.12.1992
(73) Patentinhaber: FRIEDRICH GROHE AKTIENGESELLSCHAFT, D-58675 Hemer (DE)
(72) Erfinder: Gnauert, Werner, W-5860 Iserlohn (DE); Hochstein, Detlef, W-5870 Hemer (DE)

(56) Entgegenhaltungen:
- GB-A- 1 527 018
- GB-A- 2 099 945
- US-A- 3 389 923
- US-A- 3 773 360
- US-A- 4 105 226

## Beschreibung

Die Erfindung betrifft eine lösbare Verbindung eines Rohrs o.dgl. mit einem Gehäuse, insbesondere Sanitärarmatur, wobei in jeweils einer Bohrung des Gehäuses ein Endbereich des Rohrs mit einer Dichtung einschiebbar ist, welcher in der Stecklage von einem mittels Gewinde mit dem Gehäuse verbindbaren Sicherungseinrichtung gehalten ist.
Eine derartige Einrichtung an einer sanitären "Einloch"-Mischbatterie ist aus der DE-OS 23 04 658 bekannt, wobei zur Sicherung die Rohrenden in der Stecklage in dem Batteriegehäuse von einem an der Stirnseite vorgelagerten Unterlagskörper gehalten werden, welcher wiederum mittels Schrauben oder einer Überwurfmutter an dem Gehäusesockel verschraubbar ist. Diese Einrichtung ist relativ aufwendig, wobei insbesondere die Installation der "Einloch"-Mischbatterie an einem Wasch- oder Spültisch etc. durch das unter dem Tisch stattfindende Verschrauben der Sicherungseinrichtung problematisch sein dürfte.
Ferner ist eine Schlauchkupplung (DE 39 33 589 Al) bekannt, bei der das Steckerteil mit Hilfe eines Sicherungsrings, der schräg nach außen gespreizte Rastarme aufweist, in der Stecklage gesichert wird. Die Rastarme greifen hierbei in der Stecklage hinter eine Ringschulter am Kupplungsgehäuse und verhindern ein Herausziehen. Zur Trennung der Kupplung ist eine besondere Einrichtung vorgesehen.

Der Erfindung liegt die Aufgabe zugrunde, die im Oberbegriff des Anspruchs 1 angegebene Verbindungseinrichtung zu verbessern und insbesondere so auszubilden, daß die Verbindung durch Einstecken des Rohrstücks herstellbar ist.

Diese Aufgabe wird erfindungsgemäß dadurch gelöst, daß in der Bohrung am Eingangsbereich des Gehäuses das Gewinde in der Bohrungswandung ausgebildet ist und der Endbereich des Rohrs als Sicherungseinrichtung eine axial festliegend angeordnete Federrasthülse trägt, die eine oder mehrere radial federnd gespreizte Zungen aufweist, derart, daß nach dem Einschieben des Rohrs die Zunge(n) sich an der Gewindeflanke abstützen und ein Herausziehen verhindern.
Weitere Ausgestaltungen der Erfindung sind in den Ansprüchen 2 bis 12 angegeben.

Mit den vorgeschlagenen Maßnahmen wird erreicht, daß eine dichte Verbindung der Rohre mit dem Gehäuse durch einfaches Einstecken herstellbar ist. Die Verbindung kann dabei, z.B. mit Hilfe eines speziellen Werkzeugs, durch ein Drehen der Federrasthülse in dem Gewinde wieder getrennt werden. Die Federrasthülse ist hierbei so lange zu drehen bis die gespreizten, an der Flanke des Gewindes anliegenden Zungen von dem Gewinde wieder freigegeben werden.
Vorteilhaft werden die radial vorstehenden Zungen der Federrasthülse mit einer entsprechend der Steigung des Gewindes geschrägten Stirnseite versehen. Zweckmäßig kann als Gewinde ein Sägengewinde vorgesehen werden, wobei die etwa senkrecht zur Mittelachse gelegene Gewindeflanke die Stützfläche für die Zungen bildet.
In einer bevorzugten Ausführung kann die Federrasthülse aus nichtrostendem Chromstahlblech hergestellt werden, wobei mit Hilfe des verbleibenden Längsschlitzes die Federrasthülse federnd aufgeweitet und über das Rohrende in ihre Position gestreift werden kann. In der Rohrwandung kann zu diesem Zweck ein im Durchmesser verringerter Halsbereich eingewalzt sein, in die die Federrasthülse dann federnd eingreift und axial fixiert ist.
Darüber hinaus kann vorteilhaft vor dem Halsbereich ein im Durchmesser erweiterter Anschlagbund sowie eine Ringnut zur Aufnahme eines Dichtrings eingewalzt werden.
Um eine formschlüssige Verbindung eines Werkzeugs mit der Federrasthülse zu ermöglichen, können zweckmäßig Radialbohrungen in der Wandung der Federrasthülse vorgesehen werden.

Ein Ausführungsbeispiel der Erfindung ist in der Zeichnung dargestellt und wird im folgenden näher beschrieben. Es zeigt
- Figur 1: einen Teil einer sanitären "Einloch"-Mischbatterie mit Anschlußrohren im Längsschnitt, wobei in der linken Bildhälfte das Rohr vor dem Einführen in die Bohrung des Gehäuses gezeigt ist, während in der rechten Bildhälfte sich das Rohr in der Stecklage verrastet in dem Gehäuse befindet;
- Figur 2: das in Figur 1 gezeigte Rohrende in Seitenansicht;
- Figur 3: die in Figur 1 gezeigte Rasthülse in Seitenansicht;
- Figur 4: die Rasthülse gemäß Figur 3 in Draufsicht;
- Figur 5: eine Abwicklung der Rasthülse gemäß Figur 3.

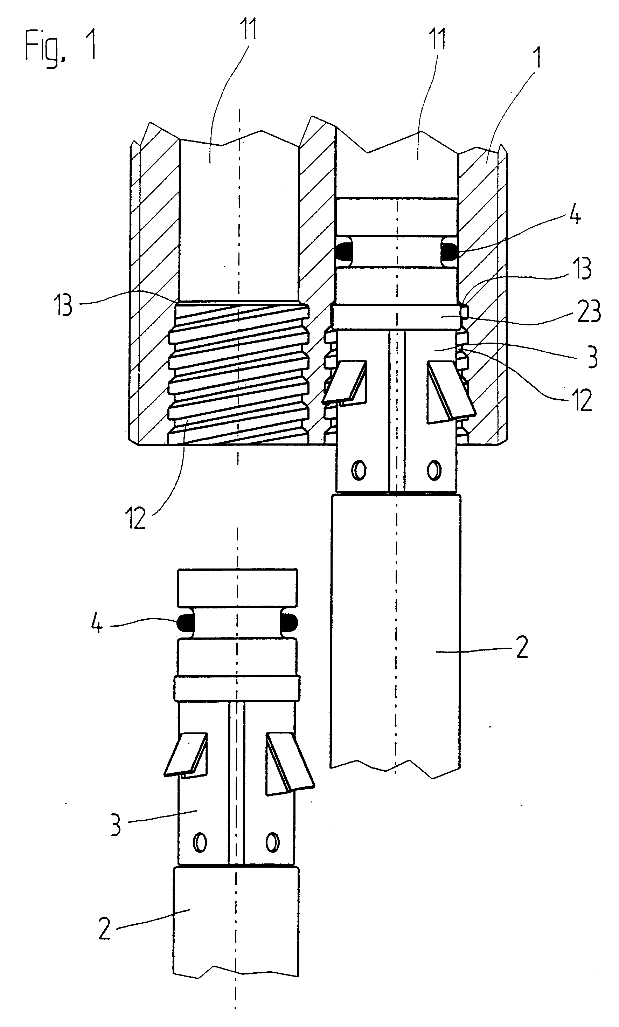

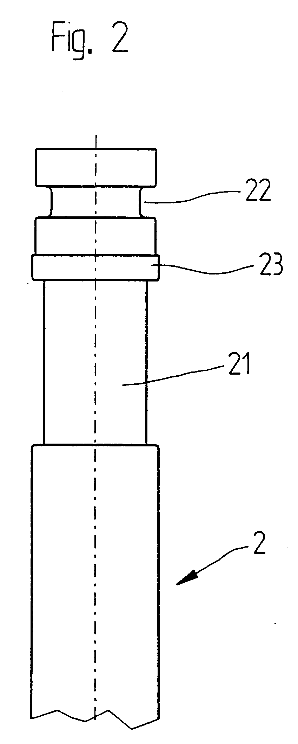

Die in Figur 1 mit einem Gehäuse 1 zum Teil gezeigte Sanitärarmatur ist als "Einloch"-Mischbatterie ausgebildet, wobei je ein Rohr 2 für die Kalt- und Warmwasserzuführung in einem Sockelteil des Gehäuses 1 angeordnet ist. Die Rohre 2 sind dabei als Kupferrohre mit einem Außendurchmesser von 10 mm ausgebildet und dienen zur Anpassung und Anschließung an das in der Gebäudewand installierte Versorgungsleitungsnetz.
In dem Gehäuse 1 ist für jedes Rohr 2 eine Bohrung 11 vorgesehen. Die Bohrung 11 weist dabei einen inneren, engeren Bereich auf, an dessen Wandung ein Dichtring 4 die Abdichtung zwischen dem Gehäuse 1 und dem Rohr 2 bewerkstelligt. Der äußere Endbereich der Bohrung 11 ist geringfügig erweitert ausgebildet und hat an der Wandung ein Gewinde 12. Am Übergang vom Gewinde 12 zum inneren Bereich der Bohrung 11 ist eine Schulter 13 ausgebildet, an der in der Stecklage das Rohr 2 mit einem Anschlagbund 23 zur Anlage gelangt. Das Gewinde 12 ist als Sägengewinde S 11,2 x 2 ausgebildet, wobei die senkrecht zur Achse angeordnete Gewindeflanke die Rastfläche für die an einer Federrasthülse 3 ausgebildeten Zungen 31 bildet. Selbstverständlich kann auch ein anderes Gewinde vorgesehen werden. Das Rohr 2 weist an seinem Endbereich, wie es insbesondere aus Figur 2 zu entnehmen ist, eine Ringnut 22 für die Aufnahme des Dichtrings 4 auf. Mit einem erforderlichen Abstand von der Ringnut 22 ist der Anschlagbund 23 und im Anschluß daran ein im Durchmesser kleinerer Halsbereich 21 ausgebildet für die axial festliegende Aufnahme der Federrasthülse 3.

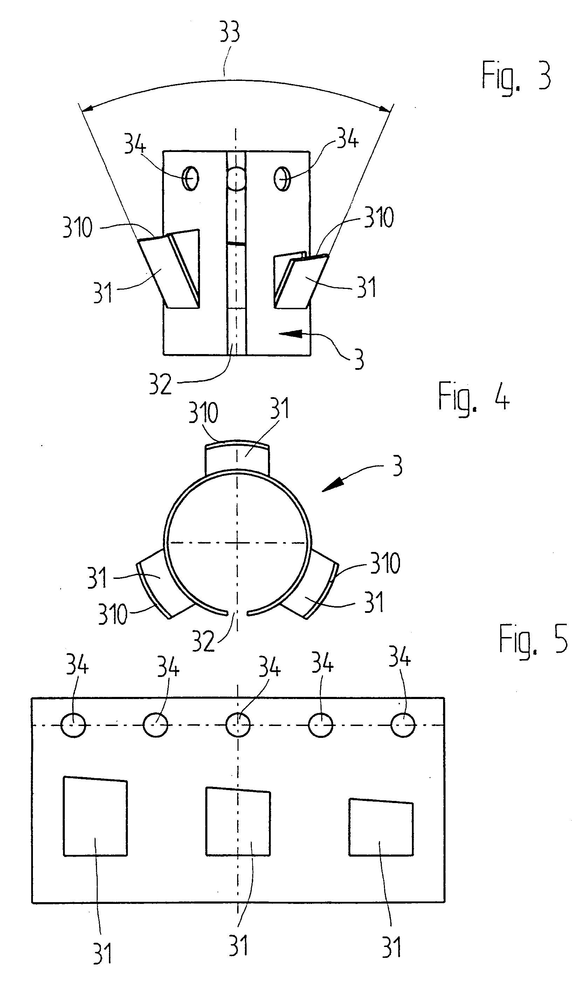

Die Federrasthülse 3 ist, wie es insbesondere aus den Figuren 3,4 und 5 zu entnehmen ist, aus Flachmaterial geformt worden und weist eine zylindrische Mantelfläche auf, wobei die Mantelfläche durch einen Längsschlitz 32 unterbrochen ist, so daß die Hülse aufgeweitet, über den Anschlagbund 23 geschoben und im Halsbereich 21 federnd verrastet werden kann. Im Mantelbereich der Federrasthülse 3 sind etwa symmetrisch drei Zungen 31 kegelförmig ausgebogen. Die vorstehende Stirnseite 310 der Zungen 31 ist dabei so bemessen, daß entsprechend der Gewindesteigung alle drei Stirnseiten 310 an der Gewindeflanke in der Stecklage anliegen. Die etwa kegelförmig angeordneten Zungen 31 weisen einen Öffnungswinkel 33 von etwa 60° auf, wobei die Kegelspitze in das Gehäuse 1 hineinzeigt.
Die Federrasthülse 3 ist dabei aus nichtrostendem Chromstahlblech hergestellt. Das Chromstahlblech weist eine Dicke von etwa 0,5 mm auf.

Die Verbindung kann in folgender Weise zusammengefügt bzw. getrennt werden:
Die in Figur 3 gezeigte Federrasthülse 3 kann mit Hilfe von Radialbohrungen 34 mit einem Spezialwerkzeug, beispielsweise Zange, gespreizt werden, so daß sie über den Anschlagbund 23 in den Halsbereich 21 eingeschoben und hier zurückfedernd zwischen den Schultern der Stirnseiten axial festliegend gehaltert wird. Nunmehr kann der Dichtring 4 in die Ringnut 22 eingelegt werden.
Das so vorbereitete Rohr 2 kann danach in die Bohrung 11 (Figur 1, linke Bildhälfte) eingeschoben werden. Der vordere, das Gewinde 12 aufweisende Bereich der Bohrung 11 ist erweitert ausgebildet, so daß der Dichtring 4 unbeschadet in den engeren, die Abdichtung bewerkstelligenden Bereich der Bohrung 11 gelangen kann. Hierbei werden die Zungen 31 durch die Gewindegänge federnd gegen die Mittelachse ausgelenkt bis der Anschlagbund 23 an der Schulter 13 zur Anlage gelangt. Wirkt hiernach ein Fluiddruck in der Bohrung 11 auf das Rohr 2 ein und/oder werden Zugkräfte auf das Rohr 2 gebracht, so spreizen sich die Zungen 31 radial aus und gelangen mit ihren Stirnseiten 310 an der Gewindeflanke zur Anlage und verriegeln somit die Verbindung.
Soll die Verbindung gelöst werden, was in besonderen Fällen erforderlich sein kann, z.B. wenn das Rohr 2 beschädigt worden ist, kann durch ein Drehen der Federrasthülse 3 diese aus dem Gewinde 12 herausgedreht werden, womit eine Trennung der Verbindung bewirkt wird. Das Herausdrehen der Federrasthülse 3 aus dem Gewinde 12 kann z.B. mit Hilfe eines Hakenschlüssels, der in die Radialbohrung 34 einfaßt, erleichtert werden.

## Patentansprüche

1. Lösbare Verbindung eines Rohrs o.dgl. mit einem Gehäuse, insbesondere Sanitärarmatur, wobei in jeweils einer Bohrung des Gehäuses ein Endbereich des Rohrs mit einer Dichtung einschiebbar ist, welcher in der Stecklage von einem mittels Gewinde mit dem Gehäuse verbindbaren Sicherungseinrichtung gehalten ist, dadurch gekennzeichnet, daß in der Bohrung (11) am Eingangsbereich des Gehäuses (1) das Gewinde (12) in der Bohrungswandung ausgebildet ist und der Endbereich des Rohrs (2) als Sicherungseinrichtung eine axial festliegend angeordnete Federrasthülse (3) trägt, die eine oder mehrere radial federnd gespreizte Zunge(n) (31) aufweist, derart, daß nach dem Einschieben des Rohrs (2) die Zunge(n) (31) sich an der Gewindeflanke abstützt(en) und ein Herausziehen verhindert(n).

2. Verbindung nach Anspruch 1, dadurch gekennzeichnet, daß die Zungen (31) entsprechend der Steigung des Gewindes (12) ausgelegt sind, derart, daß alle Zungen (31) sich an einer Flanke des Gewindes (12) abstützen.

3. Verbindung nach Anspruch 1 oder 2, dadurch gekennzeichnet, daß die Federrasthülse (3) durch einen Längsschlitz (32) unterteilt ist.

4. Verbindung nach einem der Ansprüche 1 bis 3, dadurch gekennzeichnet, daß die Ferderrasthülse (3) von einem im Durchmesser kleineren Halsbereich (21) des Rohrs (2) axial festliegend gehaltert ist.

5. Verbindung nach einem der Ansprüche 1 bis 4, dadurch gekennzeichnet, daß die Zungen (31) aus dem zylindrischen Mantel der Federrasthülse (3) kegelförmig mit etwa einem Öffnungswinkel (33) von 30 bis 90° , vorzugsweise von 60°, vorkragen, wobei die Kegelspitze in die Einschiebrichtung weist.

6. Verbindung nach einem der Ansprüche 1 bis 5, dadurch gekennzeichnet, daß am Endbereich des Rohrs (2) zunächst eine Ringnut (22) im Außenmantel zur Aufnahme eines Dichtrings (4) eingeformt ist, wonach mit geringem Abstand ein radial vorstehender Anschlagbund (23) und im Anschluß der im Durchmesser verringerte Halsbereich (21) zur Aufnahme der Federrasthülse (3) vorgesehen ist.

7. Verbindung nach einem der Ansprüche 1 bis 6, dadurch gekennzeichnet, daß das Gewinde (12) als Innensägengewinde ausgebildet ist, wobei die etwa senkrecht zur Mittelachse angeordnete Gewindeflanke als Widerlager für die Zungen (31) dient.

8. Verbindung nach einem der Ansprüche 1 bis 7, dadurch gekennzeichnet, daß die Federrasthülse (3) aus nichtrostendem Stahlband geformt ist.

9. Verbindung nach einem der Ansprüche 6-8, dadurch gekennzeichnet, daß der Außendurchmesser des Anschlagbunds (23) geringfügig kleiner als der Bohrungsdurchmesser des Gewindes (12) ausgebildet ist und an einer Schulter (13) in der Bohrung (11) nach der erforderlichen Einstecktiefe zur Anlage gelangt.

10. Verbindung nach einem der Ansprüche 1 bis 9, dadurch gekennzeichnet, daß die Federrasthülse (3) wenigstens an einem Endbereich eine oder mehrere Radialbohrungen (34) zur Handhabung der Federrasthülse (3) aufweist.

11. Verbindung nach einem der Ansprüche 1 bis 10, dadurch gekennzeichnet, daß als Rohr (2) ein Metallrohr, vorzugsweise ein Kupferrohr, mit einem Außendurchmesser von 10 mm vorgesehen ist, in dessen Endbereich die Ringnut (22) in einem im Durchmesser verringerten Rohrmantel und im Anschluß an den Anschlagbund (23) der Halsbereich (21) eingewalzt sind, wobei die Federrasthülse (3) aus rostfreiem Federstahlblech mit einer Dicke von etwa 0,5 mm hergestellt ist und drei etwa symmetrisch auf dem Umfang verteilte Zungen (31) aufweist.

12. Verbindung nach Anspruch 11, dadurch gekennzeichnet, daß als Gewinde (12) ein Sägengewinde S 11,2 x 2 mit einem lichten Durchmesser von 10,2 mm vorgesehen ist, wobei der engere Bereich der Bohrung 11 einen Durchmesser von etwa 9,6 mm hat.

## Claims

1. A detachable connection of a pipe or the like to a housing, especially a sanitary fitting, an end region of the pipe being able to be pushed, with a seal, into a respective bore of the housing, and being held in the inserted position by a securing means that can be connected to the housing by means of a screw thread, characterised in that in the bore (11) in the inlet region of the housing (1), the screw thread (12) is formed in the wall of the bore and the end region of the pipe (2) carries, as securing means, a spring locking sleeve (3), arranged so as to be fixed in an axial direction, which has one or more tongues (31) expanded resiliently in a radial direction, so that after the pipe (2) has been pushed in, the tongue(s) (31) bear(s) against the flank of the screw thread and prevent(s) pulling out.

2. A connection according to Claim 1, characterised in that the tongues (31) are arranged corresponding to the pitch of the screw thread (12) in such a way that all tongues (31) bear against a flank of the screw thread (12).

3. A connection according to Claim 1 or 2, characterised in that the spring locking sleeve (3) is divided by means of a longitudinal slot (32).

4. A connection according to one of Claims 1 to 3, characterised in that the spring locking sleeve (3) is secured, by a neck region (21) of the pipe (2) of smaller diameter, so as to be fixed in an axial direction.

5. A connection according to one of Claims 1 to 4, characterised in that the tongues (31) project out of the cylindrical outer wall of the spring locking sleeve (3) in a cone shape with an opening angle (33) of approximately 30 to 90°, preferably 60°, the apex of the cone pointing in the insertion direction.

6. A connection according to one of Claims 1 to 5, characterised in that in the end region of the pipe (2) there is first formed an annular groove (22) in the outer wall to receive a sealing ring (4), after which there is provided, at a short distance, a radially projecting stop collar (23) and next to it the neck region (21) of reduced diameter to receive the spring locking sleeve (3).

7. A connection according to one of Claims 1 to 6, characterised in that the screw thread (12) is in the form of an internal sawtooth screw thread, the screw thread flank arranged approximately perpendicularly to the central axis serving as a bearing surface for the tongues (31).

8. A connection according to one of Claims 1 to 7, characterised in that the spring locking sleeve (3) is formed from stainless steel strip.

9. A connection according to one of Claims 6 to 8, characterised in that the outside diameter of the stop collar (23) is slightly smaller than the bore diameter of the screw thread (12), and comes to bear against a shoulder (13) in the bore (11) after the required depth of insertion.

10. A connection according to one of Claims 1 to 9, characterised in that the spring locking sleeve (3) has, at least in one end region, one or more radial bores (34) for manipulating the spring locking sleeve (3).

11. A connection according to one of Claims 1 to 10, characterised in that, as the pipe (2), a metal pipe, preferably a copper pipe, having an outside diameter of 10 mm is provided, into the end region of which the annular groove (22) is rolled in a pipe wall of reduced diameter and, next to the stop collar (23), the neck region (21) is rolled, the spring locking sleeve (3) being produced from stainless spring steel sheet which has a thickness of approximately 0.5 mm, and having three tongues (31) distributed approximately symmetrically over the circumference.

12. A connection according to Claim 11, characterised in that, as the screw thread (12), there is provided an S 11.2 x 2 sawtooth screw thread having an inside diameter of 10.2 mm, the narrower region of the bore 11 having a diameter of approximately 9.6 mm.

## Revendications

1. Liaison amovible d'un tube ou analogue à un boîtier notamment au corps d'un robinet sanitaire, une extrémité du tube pouvant s'emboîter avec un joint dans chaque perçage du boîtier, ce tuyau étant maintenu en position engagée à l'aide de dispositifs de fixation qui peuvent être reliés au boîtier par l'intermédiaire du filetage, caractérisée en ce que dans la zone d'entrée du boîtier (1), le filetage (12) est réalisé dans la paroi du perçage (11), et la zone d'extrémité du tuyau (2) porte comme dispositif de fixation, une douille d'accrochage à ressort (3) assurant la fixation axiale, et comportant une ou plusieurs languettes (31) écartées élastiquement dans la direction radiale de façon qu'après introduction du tuyau (2), la ou les languettes (31) s'appuient contre les flancs du filetage et interdisent l'extraction.

2. Liaison selon la revendication 2, caractérisée en ce que les languettes (31) sont conçues en fonction de la pente du filetage (12) de façon que toutes les languettes (31) s'appuient contre un flanc du filetage (12).

3. Liaison selon la revendication 1 ou 2, caractérisée en ce que la douille d'accrochage à ressort (3) est subdivisée par une fente longitudinale (32).

4. Liaison selon l'une des revendications 1 à 3, caractérisée en ce que la douille d'accrochage à ressort (3) est maintenue de manière fixe axialement par une zone (21) de plus petit diamètre formant col sur le tuyau (2).

5. Liaison selon l'une des revendications 1 à 4, caractérisée en ce que les languettes (31) sont en saillie de l'enveloppe cylindrique de la douille d'accrochage à ressort (3), suivant une forme conique avec un angle d'ouverture (33) de 30 à 90° de préférence de 60° et la pointe du cône est tournée dans la direction d'introduction.

6. Liaison selon l'une des revendications 1 à 5, caractérisée en ce que sur la zone d'extrémité du tuyau (2) une gorge (22) est formée tout d'abord dans l'enveloppe extérieure pour recevoir un joint d'étanchéité (4), puis à une certaine distance se trouve une collerette de butée (23) en saillie radiale et à la suite se trouve la zone formant col (21) de diamètre réduit pour recevoir la douille d'accrochage à ressort (3).

7. Liaison selon l'une des revendications 1 à 6, caractérisée en ce que le filetage (12) est un filetage en dents de scie intérieur et le flanc de filetage qui est sensiblement perpendiculaire à l'axe sert d'appui aux languettes (31).

8. Liaison selon l'une des revendications 1 à 7, caractérisée en ce que la douille d'accrochage à ressort (3) est formée à partir d'un ruban d'acier inoxydable .

9. Liaison selon l'une des revendications 6 à 8, caractérisée en ce que le diamètre extérieur de la collerette de butée (23) est légèrement inférieur au diamètre du perçage du filetage (12) et arrive en appui contre un épaulement (13) du perçage (11) après avoir été introduit de la profondeur d'engagement nécessaire.

10. Liaison selon l'une des revendications 1 à 9, caractérisée en ce que la douille d'accrochage à ressort (3) comporte au moins au niveau d'une zone d'extrémité, un ou plusieurs perçages radiaux (34) pour permettre de prendre la douille d'accrochage à ressort.

11. Liaison selon l'une des revendications 1 à 10, caractérisée en ce que le tuyau (2) est un tuyau métallique de préférence un tuyau en cuivre d'un diamètre extérieur de 10 mm et dans sa zone d'extrémité on a réalisé par roulement, la gorge (22) dans l'enveloppe de tube de diamètre réduit, puis on a réalisé par laminage à la molette la collerette formant butée (23) de la zone de col (21), la douille d'accrochage à ressort (3) étant en acier élastique inoxydable d'une épaisseur de l'ordre de 0,5 mm comportant trois languettes (31) réparties de manière sensiblement symétrique à la périphérie.

12. Liaison selon la revendication 11, caractérisée en ce que le filetage (12) est un filetage en dents de scie S, 11,2 x 2 de diamètre de 10,2 mm et la zone étroite du perçage (11) présente un diamètre environ de 9,6 mm.
